# EUROPÄISCHE PATENTANMELDUNG

(11) **EP 1 574 393 A2**
(43) Veröffentlichungstag der Anmeldung: **14.09.2005**
(21) Anmeldenummer: 05003565.8
(22) Anmeldetag: 18.02.2005
(51) Int. Cl.: B60R 1/02

(54) **Verfahren zum Ausrichten eines Spiegels an einem Kraftfahrzeug**

(30) Priorität: 10.03.2004 DE 102004011714
(71) Anmelder: GM Global Technology Operations, Inc., Detroit, MI 48265-3000 (US)
(72) Erfinder: Balzer, Dirk, Dr. c/o Erich u. Karina Balzer, 57074 Siegen (DE)
(74) Vertreter: Daniel, Ulrich W.P.

(57) **Zusammenfassung**

Bei einem Verfahren zum Ausrichten mindestens eines Rückblickspiegels (5, 6) an einem Kraftfahrzeug mit einer Innenraumsensorik (1) zur Ermittlung aktueller Positionsparameter zumindest eines Fahrers, wird der Rückblickspiegel (5, 6) in Abhängigkeit von der über die Innenraumsensorik (1) festgestellten Kopf- bzw. Augenposition des Fahrers selbsttätig eingestellt.

## Beschreibung

Die Erfindung bezieht sich auf ein Verfahren zum Ausrichten mindestens eines Rückblickspiegels an einem Kraftfahrzeug mit einer Innenraumsensorik zur Ermittlung aktueller Positionsparameter zumindest eines Fahrers.

Aus der Praxis der Kraftfahrzeugtechnik ist es bekannt, im Innenraum eines Kraftfahrzeuges entweder am Dachhimmel oder innenseitig an der Frontscheibe einen Rückspiegel anzuordnen, mit dem der Fahrer des Kraftfahrzeuges das rückwärtige Verkehrsgeschehen überwachen kann. Ebenso ist zumindest auf der Fahrer- und gegebenenfalls auf der Beifahrerseite außenseitig an der Fahrzeugkarosserie ein Außenspiegel angebracht, mit dem die seitlich hinter dem Kraftfahrzeug liegenden Bereiche, beispielsweise bei einem Spurwechsel auf einer mehrspurigen Fahrbahn oder beim Abbiegen an einer Kreuzung, eingesehen werden können.

Um diese Rückblickspiegel an die individuellen Bedürfnisse eines Fahrers, beispielsweise bei unterschiedlichen Körpergrößen oder Sitzpositionen, anzupassen ist es bekannt, derartige Rückblickspiegel in ihrer Neigung und seitlichen Ausrichtung veränderbar einzustellen, damit in Abhängigkeit der eingestellten Spiegelpositionen und der individuell unterschiedlichen Positionen der Augen verschiedener Fahrer jeweils ein größtmögliches Blickfeld vorliegt. Hierzu ist es bei Außenspiegeln üblich, diese über elektrische Stellmotoren vom Fahrer auf seine Bedürfnisse einzustellen. Über einen kreuzweise betätigbaren Schalter wird der linke Außenspiegel nach oben/unten und links/ rechts verstellt. Mit einem Verstellknopf kann der Schalter auf den rechten Außenspiegel umgestellt werden. In analoger Weise kann der Innenspiegel mit Hilfe von Elektromotoren eingestellt werden.

Besonders bei Kraftfahrzeugen in gehobenen Fahrzeugklassen ist es bekannt, einen elektrisch verstellbaren Fahrersitz mit einer Memory-Funktion zu versehen, wodurch mehrere Fahrer ihre individuellen Einstellungen des Fahrersitzes speichern können. Hierbei können auch die jeweils entsprechenden Einstellungen des Innen- und Außenspiegels entsprechend mitverändert werden, um eine schnellstmögliche Anpassung des Fahrersitzes sowie der Spiegeleinstellungen an unterschiedliche Fahrer zu erhalten. Eine von der Memory-Einstellung abweichende oder sich während einer längeren Fahrt ändernde Sitzhaltung des Fahrers auf dem Fahrersitz führt allerdings dazu, dass die Spiegel nicht mehr optimal eingestellt sind.

Häufig wird das korrekte Einstellen der Spiegel zur bestmöglichen Überwachung des rückwärtigen Verkehrgeschehens von einem Fahrer aus Vergesslichkeit unterlassen, was zu einer ungenauen Beobachtungsmöglichkeit des rückwärtigen Verkehrs führt und damit eine potentielle Verkehrsgefährdung darstellt.

Die DE 199 04 737 A1 offenbart eine Innenraumsensorik für Positionsparameter von Fahrzeuginsassen in einem Kraftfahrzeug, bei der optische Sensorelemente im innenliegenden Rückspiegel des Kraftfahrzeuges angeordnet sind, um die Anwesenheit von Personen auf dem Fahrer- und gegebenenfalls dem Beifahrersitz festzustellen. Mit den Sensorelementen wird laufend die aktuelle Sitzposition dieser Personen erfasst. Beugt sich beispielsweise der Beifahrer nach vorne, um das Handschuhfach zu öffnen, wird während des nach vorne Beugens und im Falle eines gleichzeitigen Auslösens des Beifahrerairbags dieser derart angesteuert, dass er nicht mit vollem Druck aufgeblasen wird, da hierbei der sich entfaltende Luftsack zu einer Verletzung der sich nach vorne beugenden Person führen könnte. Mit der Innenraumsensorik werden potentielle Hindernisse im Aufblasbereich der Airbags im Innenraum des Kraftfahrzeuges erfasst, um die passive Sicherheit des Kraftfahrzeuges zu erhöhen.

Es ist Aufgabe der Erfindung, ein Verfahren zum Ausrichten mindestens eines Rückblickspiegels an einem Kraftfahrzeug der eingangs genannten Art anzugeben, mit dem eine Anpassung der Spiegelstellung an unterschiedliche Fahrer bzw. deren unterschiedliche Sitzhaltungen ohne konstruktiven Mehraufwand gewährleistet ist.

Erfindungsgemäß wird die Aufgabe dadurch gelöst, dass der Rückblickspiegels in Abhängigkeit von der über die Innenraumsensorik festgestellte Kopf- bzw. Augenposition des Fahrers selbsttätig eingestellt wird.

Der Kerngedanke der Erfindung besteht darin, dass die bereits im Kraftfahrzeug vorhandene Innenraumsensorik, die feststellen kann, ob und wenn ja in welcher Haltung sich eine Person auf einem Kraftfahrzeugsitz befindet, dazu verwendet wird, den Rückblickspiegel, also beispielsweise mindestens einen Außenspiegel und/oder Innenrückspiegel, derart selbsttätig auszurichten, dass der Fahrer des Kraftfahrzeuges ein optimales Sichtfeld nach hinten hat. Aus den Sensorsignalen kann über eine geeignete Auswerteelektronik die Position des Kopfes des Fahrers bzw. seiner Augen ermittelt und anhand dieser Position und der bekannten Position des fest am Kraftfahrzeug angeordneten Rückblickspiegels auf dessen optimale Einstellung für ein größtmögliches Sichtfeld geschlossen werden. Das entsprechende Einstellen des Innenspiegels und der Außenspiegel erfolgt dann durch eine dementsprechende Ansteuerung der elektrischen Stellmotoren der Rückblickspiegel.

Der Vorteil der Erfindung liegt darin, dass der Rückblickspiegel selbsttätig in die optimale Position verschwenkt wird, ohne dass der Fahrer dies selbst vornehmen muss. Hierfür ist auch kein konstruktiver oder sonstiger Mehraufwand notwendig, da die Sensorsignale der bereits im Kraftfahrzeug vorhandenen Innenraumsensorik verwendet werden. Die Innenraumsensorik und die Stellmotoren des Rückblickspiegels sind üblicherweise mit dem Fachmann bekannten Datenbus-Architekturen im Kraftfahrzeug miteinander vernetzt, so dass das Ansteuern der Stellmotoren ausgehend von den Sensorsignalen in einfacher Weise realisierbar ist. Die Auswertung der Sensorsignale und die Berechnung der optimalen Einstellung des Rückblickspiegels kann in einer zentralen Steuereinrichtung des Kraftfahrzeuges zur Steuerung aller Funktionen hard-und/oder softwaremäßig implementiert werden.

Vorzugsweise erfolgt das Ausrichten des Rückblickspiegels nach dem Einschalten einer Zündung und/oder der Beaufschlagung eines Schalters des Kraftfahrzeuges, d. h. also unmittelbar vor dem Starten des Motors oder zu einem von dem Fahrer bestimmten Zeitpunkt. Hierbei hat der Fahrer üblicherweise bereits seine gewünschte Sitzhaltung eingenommen, wodurch der Rückblickspiegel optimal ausgerichtet wird. Die Beaufschlagung eines Schalters, der beispielsweise ein bereits vorhandener Spiegelverstellschalter oder ein zusätzlicher Schalter sein kann, zur Einleitung des selbsttätigen Ausrichtens des Rückblickspiegels bietet den Vorteil, dass sich der Fahrer bezüglich seiner Sitzhaltung und des von ihm ausgelösten Vorganges bewusst ist und bei einer geänderten Sitzhaltung den Vorgang entsprechend erneut durchführen kann. Ein permanentes Ausrichten des Rückblickspiegels ist nicht erforderlich.

In einer vorteilhaften Ausgestaltung wird die korrekte Ausrichtung des Rückblickspiegels in insbesondere einstellbaren Zeitabständen wiederholt, um eine Änderung der Sitzhaltung des Fahrers zu berücksichtigen. Beispielsweise kann eine derartige Anpassung alle 10 oder 20 Sekunden erfolgen, wobei die Innenraumsensorik jeweils die Position des Kopfes bzw. der Augen des Fahrers erfasst.

Nach einer Weiterbildung wird auch die Position eines elektrisch verstellbaren Fahrersitzes bei der Berechnung der bestmöglichen Einstellung des Rückblickspiegels berücksichtigt. Hierfür werden Positionssignale der Stellmotoren, die die genaue Lage des Fahrersitzes und gegebenenfalls die Neigung seiner Rückenlehne wiedergeben, ebenfalls über einen Datenbus an die zentrale Steuereinrichtung zur Auswertung weitergeleitet. Wird die Position des Fahrersitzes beispielsweise in Längsrichtung verändert, kann dies unmittelbar bei der Einstellung des Rückblickspiegels berücksichtigt werden.

Bevorzugt wird ein optisches und/oder akustisches Warnsignal ausgegeben, wenn eine ermittelte Soll-Spiegeleinstellung außerhalb eines mechanischen Verstellbereichs des Rückblickspiegels liegt. Dies kann beispielsweise bei einem kleingewachsenen Fahrer, dessen Fahrersitz nicht nach oben verstellt ist, der Fall sein, so dass selbst bei größtmöglicher Verschwenkung des Rückblickspiegels kein optimales Sichtfeld erzielt wird.

Das Messprinzip, mit dem die Innenraumsensorik die Position des Kopfes bzw. der Augen des Fahrers erfasst, ist im Rahmen der Erfindung beliebig wählbar. Zweckmäßigerweise wird die Kopf- bzw. Augenposition mit einem Laserstrahl mit optischen Messprinzipien erfasst. Ebenso ist es möglich, Infrarotwellen zu verwenden.

Um den Spiegel unabhängig von der selbsttätigen Ausrichtung in eine gewünschte Position verschwenken zu können, ist bevorzugt das Ausrichten des Rückblickspiegels vom Fahrer übersteuerbar. Das bedeutet, dass der Fahrer in bekannter Weise mit einem Betätigungselement eines elektrischen Schalters den Rückblickspiegel elektromotorisch in die gewünschte Position verschwenken kann, wenn er beispielsweise mit dem Innenspiegel die Rücksitzbank des Kraftfahrzeuges einsehen möchte. Dies kann auch manuell durch Verschwenken des Rückblickspiegels erfolgen. Nach einer weiteren Ausgestaltung ist das selbsttätige Ausrichten des Rückblickspiegels beispielsweise mit einem Betätigungselement am Armaturenbrett des Kraftfahrzeuges abschaltbar, falls dies vom Fahrer des Kraftfahrzeuges gewünscht wird.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

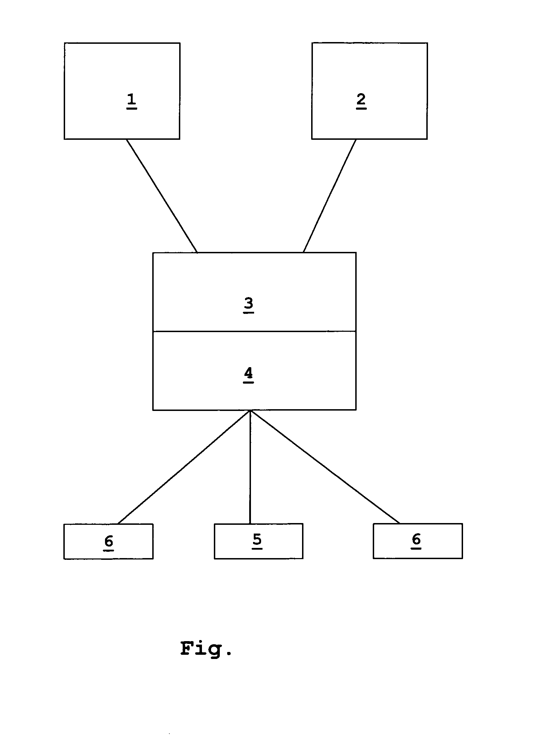

Die Erfindung wird im Folgenden anhand eines Ausführungsbeispiels unter Bezugnahme auf die zugehörige Zeichnung näher erläutert. Die einzige Fig. der Zeichnung zeigt ein schematisches Blockschaltbild einer Einrichtung zur Durchführung des erfindungsgemäßen Verfahrens.

Die Einrichtung dient zur Ausrichtung eines Innenspiegels 5 und zweier Außenspiegel 6 eines Kraftfahrzeuges. Mit einer dem Fachmann bekannten Innenraumsensorik 1, die beispielsweise bereits im Kraftfahrzeug zur Ansteuerung eines Airbagsystems vorhanden ist, wird die aktuelle Position eines Fahrers des Kraftfahrzeuges überwacht und die Lage seines Kopfes bzw. seiner Augen ermittelt. Dies kann mit einer Infrarot-Laser-Sensorik erfolgen. Weiterhin wird die Position eines z. B. elektrisch verstellbaren Fahrersitzes mit einer entsprechenden Fahrersitz-Sensorik 2 festgestellt. Die Signale der Innenraumsensorik 1 und der Fahrersitz-Sensorik 2 werden über vorhandene Datenbus-Architekturen an eine zentrale Steuereinrichtung 3 des Kraftfahrzeuges weitergeleitet, in der in einer Auswerteeinheit 4 die Berechnung der optimalen Verschwenkstellungen des Innenspiegels 5 und der Außenspiegel 6 des Kraftfahrzeuges erfolgt. Dabei werden unter anderem der Abstand der Augen zum Innenspiegel 5 sowie die Blickrichtung des Fahrers zugrunde gelegt. Aus diesen Daten sowie den bekannten Positionen des Innenspiegels 5 und der Außenspiegel 6 werden die jeweils optimalen Winkelstellungen der Spiegelflächen errechnet, mit denen dem Fahrer ein größtmögliches Blickfeld nach hinten geboten wird. Sobald die jeweiligen Spiegelpositionen mit dem Fachmann bekannten Algorithmen ermittelt worden sind werden entsprechende Steuersignale an jeweilige Stellmotoren des Innenspiegels 5 und der Außenspiegel 6 übermittelt, um diese in der berechneten Position auszurichten.

Die Realisierung des erfindungsgemäßen Verfahrens erfordert sonach keinen konstruktiven Mehraufwand, da nur bereits im Kraftfahrzeug vorhandene Systeme oder Komponenten verwendet werden, wodurch das Verfahren wirtschaftlich vorteilhaft ist. Zudem ist stets eine optimale Ausrichtung des Innenspiegels 5 und der Außenspiegel 6 gewährleistet, womit ein Sicherheitsgewinn für den Fahrer einhergeht.

### Bezugszeichenliste

- 1: Innenraumsensorik
- 2: Fahrersitz-Sensorik
- 3: zentrale Steuereinrichtung
- 4: Auswerteeinheit
- 5: Innenspiegel
- 6: Außenspiegel

## Patentansprüche

1. Verfahren zum Ausrichten mindestens eines Rückblickspiegels (5, 6) an einem Kraftfahrzeug mit einer Innenraumsensorik (1) zur Ermittlung aktueller Positionsparameter zumindest eines Fahrers, **dadurch gekennzeichnet, dass** der Rückblickspiegel (5, 6) in Abhängigkeit von der über die Innenraumsensorik (1) festgestellten Kopf- bzw. Augenposition des Fahrers selbsttätig eingestellt wird.

2. Verfahren nach Anspruch 1, **dadurch gekennzeichnet, dass** das Ausrichten des Rückblickspiegels (5, 6) nach dem Einschalten einer Zündung und/oder der Beaufschlagung eines Schalters des Kraftfahrzeuges erfolgt.

3. Verfahren nach Anspruch 1 oder 2, **dadurch gekennzeichnet, dass** das Ausrichten des Rückblickspiegels (5, 6) in insbesondere einstellbaren Zeitabständen wiederholt wird.

4. Verfahren nach einem der Ansprüche 1 bis 3, **dadurch gekennzeichnet, dass** die Position eines elektrisch verstellbaren Fahrersitzes berücksichtigt wird.

5. Verfahren nach einem der Ansprüche 1 bis 4, **dadurch gekennzeichnet, dass** ein optisches und/oder akustisches Warnsignal ausgegeben wird, wenn eine ermittelte Soll-Spiegeleinstellung außerhalb eines mechanischen Verstellbereichs des Rückblickspiegels (5, 6) liegt.

6. Verfahren nach einem der Ansprüche 1 bis 5, **dadurch gekennzeichnet, dass** die Kopf- bzw. Augenposition des Fahrers optisch oder mit Infrarotwellen ermittelt wird.

7. Verfahren nach einem der Ansprüche 1 bis 6, **dadurch gekennzeichnet, dass** das selbsttätige Ausrichten des Rückblickspiegels (5, 6) vom Fahrer übersteuerbar und/oder abschaltbar ist.
